Europäisches Patentamt

European Patent Office

Office européen des brevets

(11) Veröffentlichungsnummer: **0 349 888**
**A2**

## (12) EUROPÄISCHE PATENTANMELDUNG

(21) Anmeldenummer: 89111719.4

(22) Anmeldetag: 28.06.89

(51) Int. Cl.⁴: **H02P 7/638**

(30) Priorität: 05.07.88 DE 3822633

(43) Veröffentlichungstag der Anmeldung:
10.01.90 Patentblatt 90/02

(84) Benannte Vertragsstaaten:
AT BE CH DE ES FR GB GR IT LI LU NL SE

(71) Anmelder: **BSG-Schalttechnik GmbH & Co. KG**
**Meisterstrasse 19**
**D-7460 Balingen 1(DE)**

(72) Erfinder: **Sämann, Rudolf**
**Burgstrasse 12**
**D-7460 Balingen-Ostdorf(DE)**

(74) Vertreter: **Otte, Peter, Dipl.-Ing.**
**Tiroler Strasse 15**
**D-7250 Leonberg(DE)**

(54) **Vorrichtung mit Einschaltautomatik für ein Nebengerät bei Inbetriebnahme eines Hauptgerätes.**

(57) Bei einer Vorrichtung mit Einschaltautomatik für ein Nebengerät vorzugsweise in Form eines Staubsaugers, welches gleichzeitig bei Inbetriebnahme eines Hauptgeräts, welches beispielsweise ein Elektrohandwerkzeug, eine Werkzeugmaschine o.dgl. sein kann, eingeschaltet wird, wird vorgeschlagen, eine für das Nebengerät vorgesehene, für sich gesehen bekannte (Phasenanschnitt)Steuerschaltung mittels eines als Ringkern-Durchsteckübertragers ausgebildeten Stromsensors so anzusteuern, daß der Elektromotor des Nebengeräts mit vorgegebener Anlaufverzögerung (Sanftanlauf) eingeschaltet wird. Dabei ist der Ringkern-Durchsteckübertrager so ausgebildet, daß zur Erzeugung sauberer Zündimpulse für den Triac des Nebengeräts die Primärwicklung von der einen Windung der elektrischen Zuleitung des Hauptgeräts gebildet und durch die zentrale Öffnung des Ringkerns hindurchgeführt ist. Der Ringkern-Durchsteckübertrager ist so ausgebildet, daß er bei Erreichen eines vorgegebenen Ausgangsgrößenschwellwerts in die Sättigung übergeht, so daß auch sehr hohe, vom Hauptgerät bei dessen Betrieb verursachte Primärströme die (Phasenanschnitt)Steuerschaltung nicht übersteuern und insbesondere deren Triac nicht beschädigen.

Fig.1

EP 0 349 888 A2

## Vorrichtung mit Einschaltautomatik für ein Nebengerät bei Inbetriebnahme eines Hauptgerätes

Stand der Technik

Die Erfindung geht aus bei einer Vorrichtung nach dem Oberbegriff des Anspruchs 1.

Es ist schon seit längerem bekannt, Geräte, insbesondere Elektrohandwerkzeuge oder sonstige Arbeitsmaschinen unter Zwischenschaltung bekannter Phasenanschnitt-Steuerschaltungen mit dem Netz zu verbinden, wodurch es möglich ist, beispielsweise die Drehzahl des Geräts manuell zu steuern oder auf einem vorgegebenen Sollwert aufrechtzuerhalten. Ferner ist es auch möglich, solche bekannten Phasenanschnitt-Steuerschaltungen so auszulegen, daß diese beispielsweise beim Einschalten des Gerätes einen sogenannten Sanftanlauf realisieren, was verhindert, daß bei motorbetriebenen Geräten durch den hohen Einschaltstrom unerwünschte Netzbelastungsspitzen auftreten, die beispielsweise auch zum Auslösen von Sicherungen führen können.

Entsprechende Phasenanschnitt-Steuerschaltungen sind handelsüblich erhältlich und meistens in Form einer integrierten Schaltung (IC) ausgebildet, mit einer größeren Anzahl von äußeren Anschlußmöglichkeiten, so daß je nach gewünschtem Anwendungszweck durch eine äußere zusätzliche Beschaltung ein solcher Standard-IC als Phasenanschnitt-Steuerschaltung entsprechend adaptiert, den jeweiligen Wünschen und dem angeschlossenen Gerät und dessen Erfordernissen angepaßt werden kann.

Es ist ebenfalls schon bekannt, eine Einschaltautomatik für den Betrieb eines Nebengerätes in Verbindung mit einem Hauptgerät einzusetzen, was im folgenden anhand eines beispielsweise Arbeitsstaub oder Späne erzeugenden Elektrohandwerkzeugs in Verbindung mit einem diese Späne absaugenden Staubsauger genauer erläutert wird, obwohl die im nachfolgenden beschriebene Erfindung auf dieses spezielle Anwendungsgebiet, wie es sich versteht, nicht beschränkt ist.

Es ist beim Betrieb von bestimmten Elektrohandwerkzeugen, beispielsweise Kreissägen, Hobeln, Winkelschleifern, Schwingschleifern, im Grunde überall dort, wo beim Betrieb mit diesem Elektrohandwerkzeug Späne oder Stäube auftreten, sehr erwünscht und wird auch üblicherweise so gehandhabt, einen Staubsauger mitanzuschließen, der dann während des Arbeitens mit dem Elektrohandwerkzeug die anfallenden oder erzeugten Partikel absaugt. Gegebenenfalls sind solche Elektro handwerkzeuge von Anfang an schon mit eigenen Sauganschlüssen ausgestattet. Damit ein solcher Staubsauger nur dann arbeitet, wenn auch das entsprechende Hauptgerät in Betrieb ist, ist es bekannt, eine Zusatzschaltung zu verwenden, mit welcher das Hauptgerät beispielsweise mit seinem Stecker in einer entsprechend geeigneten Steckdose des Zusatzgeräts angeschlossen werden kann; dieses Zusatzgerät ist dann selbst mit dem Versorgungsnetz verbunden und speist bzw. steuert gleichzeitig das Nebengerät, also speziell hier den Staubsauger. Im Zusatzgerät ist ein Stromsensor angeordnet, üblicherweise in Form eines Übertragers, der den Strom erfaßt und dem IC der Phasenanschnittsteuerung im Zusatzgerät zuführt, der vom über die Steckdose angeschlossenen Hauptgerät oder externen Gerät bei dessen Inbetriebnahme gezogen wird. Das Zusatzgerät bzw. der IC der Phasenanschnittsteuerung für den Staubsaugermotor erkennt aus diesem zum Hauptgerät fließenden Strom dessen Inbetriebnahme und steuert im Sinne einer Einschaltautomatik auch den Staubsauger zur Inbetriebnahme an.

Wird also an die Steckdose des Zusatzgeräts ein externes Gerät, beispielsweise ein Winkelschleifer mit Staubabsauger, angeschlossen und der Winkelschleifer eingeschaltet, so läuft der Staubsauger auch an und saugt den beim Schleifen entstehenden Schleifstaub ab. Dabei fließt durch die Primärwicklung des Stromübertragers der Betriebsstrom des extern angeschlossenen Hauptgeräts; der Sekundärstrom des Übertragers wird im IC der Phasenanschnittsteuerung als Einschaltautomatik zur Ansteuerung von dessen Triac-Gate verwendet, wodurch dieser zündet, so daß der Staubsauger ebenfalls anläuft.

Eine solche bekannte Schaltung ist mit einer Vielzahl von Problemen behaftet.

Wird extern ein Gerät angeschlossen, welches nur eine kleine Leistungsaufnahme hat, dann ist nicht ausgeschlossen, daß der Triac der Phasenanschnitt-Steuerschaltung nicht genügend Zündstrom erhält, d.h. es besteht die Gefahr für den Triac, daß dieser durch hierdurch entstehende sogenannte "hot spots" zu Schaden kommt und ausfällt.

Die Möglichkeit, hier einfach einen Triac mit genügend niedrigem Zündstrom einzusetzen, führt aber nicht zur Problemlösung, denn am Triac-Gate liegt, wenn der Triac Strom führt, eine Spannung von etwa 1,5 bis 2 V (um hier mit numerischen Werten zu arbeiten) und in diesem Fall ist in der Sekundärwicklung des Übertragers auch ohne Primärstrom Energie gespeichert. Wenn der Triac dann im Stromnull des angeschlossenen Nebengerätes, also speziell des Staubsaugers löscht und primärseitig vom Hauptgerät aus, welches bei Anschluß an das gleiche Netz dann ebenfalls durch Stromnull geht, kein Strom mehr fließt, dann bricht auch die Spannung am Gate des Triac zusammen. Dies allerdings führt zu einer Entladung der im Übertrager gespeicherten Energie zurück ins Gate und damit zu einer Neuzündung des Triac, wenn dieser zündempfindlich ist. Auch dies kann zu Schäden des Triacs führen.

Wird demgegenüber als externes Gerät (Hauptgerät) ein Gerät hoher Leistung angeschlossen, dann sind der Primärstrom und somit auch der Sekundärstrom in der Regel so hoch, daß der in das Gate des Triacs fließende Strom weit über den zulässigen Maximalwerten liegt und es wieder zu einer Zerstörung des Triacs kommen kann.

Ein weiteres Problem bei externen Geräten mit hoher Leistung liegt darin, daß bei einem Übertrager mit geschichteten Blechpaketen der hohe Primärstrom zu einer so hohen Feldstärke im Eisen führt, daß der Übertrager sich stark erhitzt und es bis zum Abtrennen des Übertragers kommen kann.

Der Erfindung liegt daher die Aufgabe zugrunde, hier Abhilfe zu schaffen und eine Vorrichtung mit Einschaltautomatik für ein Nebengerät bei Inbetriebnahme eines Hauptgerätes so auszubilden, daß externe Geräte beliebiger Leistungsaufnahme angeschlossen werden können und dennoch stets saubere Zündimpulse für den das Nebengerät ansteuernden Triac zur Verfügung steht.

Vorteile der Erfindung

Die Erfindung löst diese Aufgabe mit den kennzeichnenden Merkmalen des Hauptanspruchs und hat den Vorteil, daß durch die spezielle Ausbildung des Übertragers in Form eines Ringkern-Durchsteckübertragers der von angeschlossenen externen Geräten kleinerer Leistung gezogene Strom sauber erfaßt und in Zündimpulse für den Triac des Nebengerätes umgesetzt werden kann, während auch bei sehr hohen primären Strömen die Zündimpulse auf der Basis des vom Ringkernübertragers gelieferten Stromwerte nicht wesentlich größer werden, da sich hier ein Sättigungsverhalten des Ringkerntransformators ergibt, der bei solchen entsprechend hohen Primärströmen an seiner Sekundärwicklung keine höheren Spannungen mehr entwickelt.

Damit ist sichergestellt, daß der Triac zur Staubsaugeransteuerung mit sauberen Zündimpulsen versorgt wird und selbst nicht gefährdet werden kann.

Ferner ist vorteilhaft, daß das Material des Ringkerns des Übertragers eine starke Überhitzung durch Sättigungseffekte verhindert, so daß auch bei hohen Primärströmen keine hierauf zurückzuführende Überlastung der Schaltung auftreten kann.

Ein weiterer Vorteil ist die besonders große Kostengünstigkeit des verwendeten Durchsteckübertragers im Vergleich zu den bisherigen Systemen, so daß einerseits die Schaltung in ihrer Funktionssicherheit in allen Details verbessert, andererseits kostengünstiger als bekannte Systeme ist.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist durch die Verwendung einer für sich gesehen bekannten Phasenanschnitt-Steuerschaltung (IC) die Möglichkeit, für das Nebengerät, also den Staubsauger einen Sanftanlauf zu realisieren, wodurch das Netz beim Einschalten des externen Geräts mit ohnehin hoher Leistung nicht auch noch zusätzlich durch einen hohen Einschaltstromstoß vom Staubsauger her belastet wird. Bisherige Schaltungen führten häufiger zu einem Auslösen der Sicherung, da praktisch gleichzeitig zwei vom Elektromotoren betriebene Geräte eingeschaltet wurden.

Ferner ist vorteilhaft, daß die Ansprechempfindlich keit eingestellt werden kann und es möglich ist, durch Veränderung der am Staubsauger (Nebengerät) im eingeschalteten Zustand anliegenden Spannung dessen Drehzahl zu verändern.

Schließlich erlaubt die Phasenanschnitt-Steuerschaltung des IC die Realisierung einer variablen Ausschaltverzogerung, so daß das Nebengerät noch weiterläuft, wenn das Hauptgerät kurz abgesetzt wird. Hierdurch wird auch nach dem Absetzen des Hauptgeräts noch anfallender Staub sicher abgesaugt und aufgenommen; außerdem braucht das Nebengerät nicht ebenfalls stets ausgeschaltet zu werden, wenn das Hauptgerät auch nur kurz abgesetzt wird.

Eine weitere vorteilhafte Ausgestaltung vorliegender Erfindung besteht darin, daß bei der bekannten Ausbildungsform von Staubsaugern, die auch Wasser aufsaugen können (Wassersauger), in Abhängigkeit zur Wasserhöhe im Behälter eine entsprechende Abschaltung des Staubsaugers durchgeführt werden kann, über die Phasenanschnitt-Steuerschaltung.

Schließlich ist es möglich, durch Betätigung eines externen Schalters das Nebengerät auch normal zu betreiben, also beispielsweise einen normalen Staubsaugerbetrieb durchzuführen, in dem unter Überbrük-kung der Einschaltautomatik die Drehzahl mit Hilfe der Phasenanschnitt-Steuerschaltung geändert wird.

Zeichnung

Ein Ausführungsbeispiel der Erfindung ist in der Zeichnung dargestellt und wird in der nachfolgenden Be schreibung näher erläutert. Es zeigen:

Fig. 1 schematisiert und stark vereinfacht die Grundform des parallelen Betriebs mit Einschaltautomatik eines Hauptgeräts und eines Nebengeräts und

Fig. 2 die Blockbilddarstellung der Fig. 1 in größerem Detail mit dem IC einer bekannten Phasenanschnitt-Steuerschaltung.

Beschreibung der Ausführungsbeispiele

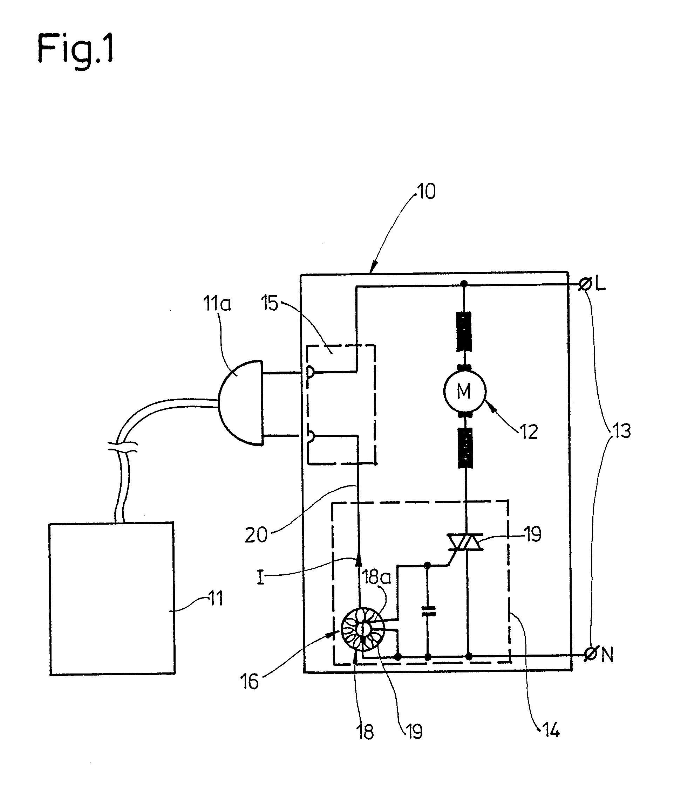

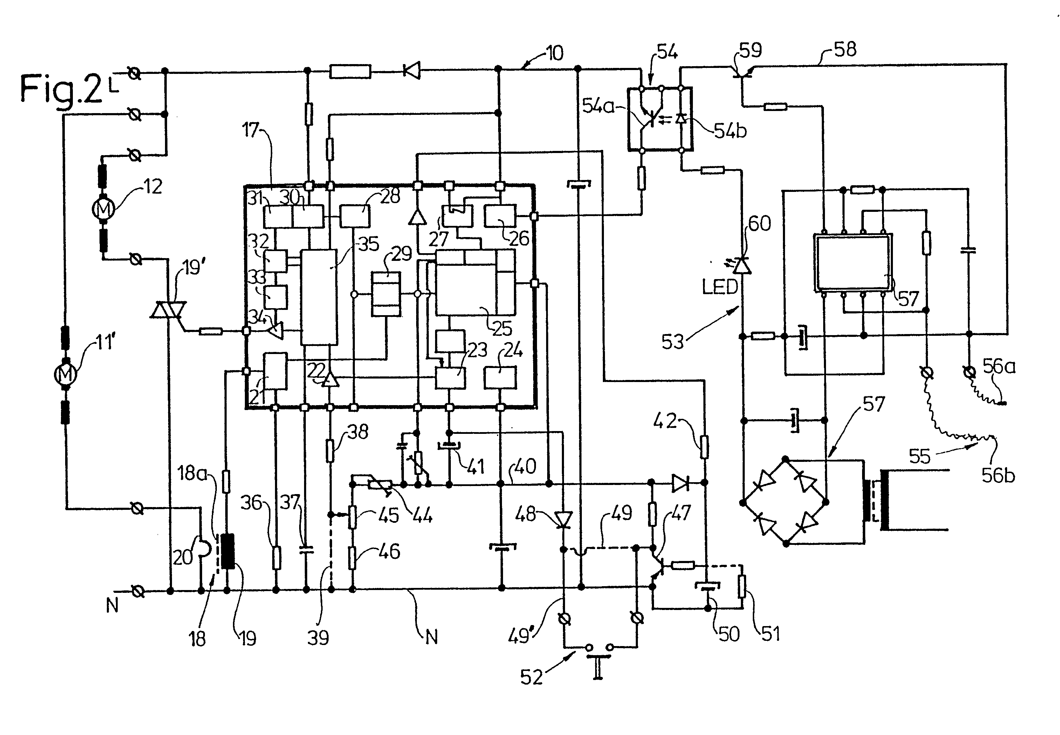

Wie Fig. 1 zeigt, ist eine Zusatzschaltung 10 vorgesehen, die es ermöglicht, ein Hauptgerät 11, welches beispielsweise eine Bohrmaschine, ein Schleifer, ein Hobel eine Kreissäge oder ein sonstiges Elektrohandwerkzeug oder eine Elektromaschine sein kann, zusammen mit einem Zusatzgerät 12, von dem in Fig. 1 lediglich symbolisch der Motor mit seinen Feldwicklungen dargestellt ist, an die gleiche Netzversorgung 13 mit den Anschlüssen L und N anzuschließen. Eine durch die gestrichelte Umrandung kenntlich gemachte Einschaltautomatik 14, die in Fig. 1 nur sehr schematisiert dargestellt ist und nachfolgend anhand der Darstellung der Fig. 2 noch im einzelnen erläutert wird, ermöglicht die automatische Inbetriebnahme des Nebengeräts, welches typischerweise ein Staubsauger sein kann, dann, wenn das Hauptgerät 11 beispielsweise durch Verbindung seines Anschlußsteckers 11a mit einer Steckdose 15 der Zusatzschaltung 10 aktiviert wird.

Das Hauptgerät 11 zieht dann einen entsprechend seinen eigenen Daten mehr oder weniger starken Strom I, der von einem Stromsensor 16 erfaßt und von der Einschalt automatik 14 zur Ansteuerung des Antriebsmotors 12 des Nebengeräts ausgenutzt wird. Bevorzugt geschieht dies mittels einer für sich gesehen bekannten Phasenanschnitt-Steuerschaltung, die als zentraler Baustein in Fig. 2 dick umrandet mit dem Bezugzeichen 17 dargestellt ist, mit einer ergänzenden peripheren Beschaltung, auf die gleich noch eingegangen wird.

Die eingangs erwähnte Problematik bei der automatischen gleichzeitigen Inbetriebnahme des Nebengeräts über die Phasenanschnitt-Steuerschaltung 14 mit Einschaltautomatik wird im wesentlichen überwunden durch die Ausbildung des Stromsensors als Ringkern-Durchsteckübertrager 18, der die Einschaltautomatik mit den erforderlichen Stromimpulsen für den Triac 19 versorgt. Der Triac 19 liegt in Reihe mit den Motoranschlüssen des Nebengeräts am gleichen Netz L, N wie das Hauptgerät 11 und man erkennt, daß durch die Erfassung des Hauptgerätestroms I über die Phasenanschnittsteuerung 14 mit Triac 19 eine Einschaltautomatik realisiert wird, bei welcher der Triac des Nebengeräts, also im speziellen Fall zur Staubsaugeransteuerung nunmehr mit sauberen Zündimpulsen ohne Gefährdung versorgt werden kann.

Wesentlich hierzu bei trägt die Auswahl des Materials des Ringkerns 18a des Ringkernübertragers, welches dafür sorgt, daß einerseits auch bei nur geringen Primärströmen hinreichend saubere Impulse an der Sekundärwicklung 19 des Ringkern-Durchsteckübertragers anliegt, mit welcher dann die Einschaltautomatik versorgt wird, andererseits aber auch bei hohen und besonders hohen Primärströmen keine Überlastung der Schaltung auftritt.

Der Grund hierfür liegt darin, daß der Verlauf der Hysteresekurve beim Material des Ringkernübertragers so gewählt ist, daß dann, wenn eine für die Erzeugung sauberer Zündimpulse für den Triac 19 hinreichend große Sekundärspannung anliegt, bei stärker werdenden primären Strömen das Sättigungsniveau erreicht wird, d.h. es findet kein weiterer Spannungsanstieg statt, wobei es aber auch nicht zu einer Überhitzung durch Sättigungseffekte kommt.

Von besonderem Vorteil ist hierbei die Ausbildung der Primärwicklung als lediglich eine Windung, gebildet von der elektrischen Zuleitung 20 zur Steckdose 15 für das Hauptgerät; dieser Zuleitungsdraht 20 wird durch die zentrale Öffnung des in geeigneter Weise auf einer Schaltungsplatte, einer Printplatte o.dgl.gelagerten oder auch nur aufgrund seiner beiden Sekundäranschlüsse gehaltenen Ringkerns geführt, gegebenenfalls bügelartig abgebogen und bildet auf diese Weise gleichzeitig die erwähnte eine Windung der Primärwicklung.

Sekundärseitig kann ein solcher Ringkern-Durchsteckübertrager 18 dann beispielsweise, je nach gewünschter Ansprechempfindlichkeit, 100 Windungen aufweisen. Es ergibt sich auf diese Weise eine hohe Funktionssicherheit in allen Details bei besonders kostengünstiger Lösung, da ein solcher Ringkern-Durchsteckübertrager aufgrund seiner kleinen Abmessungen wenig Material benötigt, ohne größere Umstände bewickelt und auf der Schaltungsplatte montiert werden kann und die Führung der einen Drahtwindung 20 als gleichzeitige Zuleitung für den Primärstrom zur Steckdose 15 und weiter zum Hauptgerät durch

4

eine entsprechende Öffnung in der Schaltungsplatte hin durch und gleichzeitig durch die zentrale Öffnung im Ringkern des Übertragers erfolgen kann.

Von besonderem Vorteil ist die Verwendung eines solchen Ringkerntransformators dann in Verbindung mit der in Fig. 2 genauer angegebenen Detailschaltung, wozu sich am zweckmäßigsten eine monolitisch integrierte Phasenanschnitt-Steuerschaltung eignet, die es in handelsüblichen und daher auch bekannten Ausführungen gibt. Als besonders geeignet hat sich hierbei herausgestellt der Baustein U 2010 B von Telefunken, dessen Hauptanwendung im Bereich der Universalmotorsteuerung mit Lastkompensation liegt, der im folgenden lediglich noch als IC-Baustein bezeichnet wird und auf dem bekannten Gebiet der Phasenanschnitt-Steuerschaltungen einige Eigenschaften kombiniert wie Vollwellen-Laststromerfassung, Netzspannungskompensation, programmierbare Laststrombegrenzung mit Überlast und Hochlastausgang, variablen Sanftanlauf, Spannungs- und Stromsynchronisierung u.dgl.

In Fig. 2 sind zum besseren Verständnis die hauptsächlichen Funktionsblöcke des IC-Bausteins 17 zur Phasenanschnittsteuerung wie folgt bezeichnet:

| 21 | Laststromdetektor (Operationsverstärker) | 22 | Pegelumsetzer |
|----|------|----|------|
| 23 | Sanftanlauf | 24 | Referenzspannung |
| 25 | Programmierbare Überlastabschaltung | 26 | Versorgungsspannungsbegrenzung |
| 27 | Hochlast | 28 | Netzspannungskompensation |
| 29 | Vollwellengleichrichter | 30 | Spannungsdetektor |
| 31 | Begrenzungsdetektor | 32 | Retriggerlogik |
| 33 | Stromdetektor | 34 | Ausgangsimpulserzeuger |
| 35 | Phasenanschnittsteuerung. | | |

Soweit sich in Fig. 2 mit den in Fig. 1 erwähnten Komponenten vergleichbare Komponenten wiederfinden, sind diese mit dem gleichen Bezugszeichen, gegebenenfalls ergänzt durch einen Beistrich oben bezeichnet. Durch die spezielle Beschaltung des IC-Bausteins (Chips) werden noch weitere bevorzugte Funktionen und Ausgestaltungen der Erfindung erzielt, auf die im folgenden in Verbindung mit den an die jeweiligen Außenanschlüsse des IC-Bausteins angeschlossenen äußeren diskreiten Schaltungselemente eingegangen wird.

Am Anschlußpin (1) liegt die Sekundärwicklung des Ringkern-Durchsteckübertragers 18; über den am Anschlußpin (2) liegenden Widerstand 36 ergibt sich der Masseanschluß des den Laststromdetektor bildenden Operationsverstärkers im IC-Baustein. Der am Anschlußpin (3) liegende Kondensator 37 und noch mehr die Beschaltung des Anschlußpin (4) bestimmen die Funktion der Phasenanschnittsteuerung des Blocks 35; wird der Anschlußpin (4) über einen Widerstand 38 lediglich, wie gestrichelt über die Verbindungsleitung 39 angedeutet, mit Masse verbunden, dann ergibt sich eine vorgegebene konstante Drehzahl für das Nebengerät, welches im folgenden ausschließlich, jedoch die Erfindung nicht einschränkend, als Staubsauger bezeichnet wird und mit seinem Antriebsmotor 12 in Fig. 2 dargestellt ist.

Es ist eine äußere Verbindungsleitung 40 vorgesehen, an die ein mit dem Anschlußpin (7) verbundener Kondensator 41 sowie gegen die untere Versorgungsleitung N geschaltet die Emitter/Kollektorstrecke eines über eine Diode 48 ebenfalls mit dem Anschlußpin (7) verbundenen Transistors 47 liegt; die Größe des Kondensators 41 bestimmt die Zeitverzögerung für den Sanftanlauf des Staubsaugermotors und dessen Ausmaß, so daß sich hier der Vorteil ergibt, daß die eine Netzzuleitung beim Einschalten des externen Hauptgeräts (mit höherer Leistung) nicht gleichzeitig noch zusätzlich durch den hohen Einschaltstromstoß des Staubsaugermotors belastet wird. Hierdurch wird verhindert, daß es zu einem sonst mit Sicherheit zu erwartenden Auslösen der Sicherung in der Netzleitung kommt; ferner ist an diese Leitung 40 noch der Anschlußpin (6), der eine Rückmeldung aus dem IC-Baustein über den Sensoreingang betrifft, angeschlossen sowie über die Reihenschaltung dreier Widerstände 44, 45, 46 (Widerstand 44 als Trimmer und Widerstand 45 als Potentiometer) wahlweise der Anschlußpin (4), so daß es möglich ist, die Drehzahl des Staubsaugermotors je nach Position des Potentiometers 45 auch zu variieren.

Die Außenbeschaltung des IC-Bausteins 17 und speziell die Verbindung des Anschlußpin (7), an welchem auch der Sanftanlaufkondensator 41 liegt, über den Transistor 47 ist für die Funktion der Einschaltautomatik in Verbindung mit dem gewünschten Sanftanlauf notwendig, da diese Zusatzschaltung 10 normalerweise schon am Netz liegt, wenn über den Stromsensor 16 das Einschalten des Hauptgeräts gemeldet wird. Damit in diesem Fall der Sanftanlauf realisiert werden kann, ergeht ein durch die interne Strukturierung des IC-Bausteins erzeugter (Sanftanlauf)Befehl vom Ausgang des Anschlußpin (13) über den Widerstand 42 zu Basis des Transistors 47, der bisher leitend geschaltet gewesen war und daher den Kondensator 41 im entladenen Zustand gehalten hat. Durch den Sperrbefehl vom Anschlußpin (13) hängt

5

der Transistor 47 ab, gibt also die Verbindung des Anschlußpin. (7) über die Diode 48 und die Verbindungsleitung 49 und seine eigene Kollektor-Emitterstrecke gegen die untere Anschlußleitung N frei.

Diese Verbindungsleitung 49 kann mit Vorteil auch ersetzt werden durch eine Verbindungsleitung 49' mit Schalter 52, daher ist die Verbindungsleitung 49 auch nur gestrichelt dargestellt. Durch Öffnen des Schalters 52 kann das Nebengerät in den normalen Arbeitsbetrieb überführt werden, d.h. normaler Staubsaugerbetrieb ohne Einschaltautomatik, wobei die Drehzahl durch Betätigung des Potentiometers 45 geändert werden kann.

Eine weitere vorteilhafte Ausgestaltung vorliegender Erfindung besteht darin, daß durch zusätzliches Verbinden des Basiskreises des Transistors 47 mit einem Kondensator 50 mit vergleichsweise hoher Kapazität mit parallelgeschaltetem Entladewiderstand für den hier vorgesehenen Betrieb mit Einschaltautomatik eine Ausschaltverzögerung, also ein Nachlauf des Staubsaugers für eine vorgegebene Zeitdauer, je nach Bemessung des Kondensators 50 bewirkt werden kann. Der Kondensator 50 sorgt nämlich dafür, daß für eine vorgegebene Zeitdauer auch nach Abschalten des Hauptgeräts, was einer Wegnahme des "Ansteuersignals" über den Stromsensor 16 entspricht, der Kondensator 41 noch freigegeben bleibt, also nicht entladen wird.

Schließlich ist noch eine insgesamt mit 53 bezeichnete Ergänzungsschaltung vorgesehen, die in der Lage ist, bestimmte Staubsaugertypen auch bei aufrechterhaltenem Betrieb im Hauptgerät unter bestimmten Bedingungen abzuschalten, und zwar dadurch, daß die Anschlußpin (10) und (11) der Versorgungsspannungsbegrenzung über einen bei dem dargestellten Ausführungsbeispiel verwendeten Optokoppler (oder auch über ein sonstiges elektrisches oder elektronisches Schaltelement) miteinander verbunden, also kurzgeschlossen werden. Der Optokoppler 54 ist bei dem dargestellten Ausführungsbeispiel Teil eines Wasserhöhensensors, so daß speziell mit einem Abschaltbefehl auf solche Staubsauger reagiert werden kann, die auch Wasser aufsaugen können. Die Schaltung 53 stellt in diesem speziellen Ausführungsbeispiel, worauf sie natürlich nicht beschränkt ist, eine Abschaltung des Staubsaugers in Abhängigkeit zur im Staubsaugerbehälter vorhandenen Wasserhöhe dar.

Hierzu ist ein Wassersensor 55 vorgesehen, der in der üblichen Weise aus zwei in der vorgegebenen Höhe an der Innenwandung des Wasserbehälters angeordneten Sensorstreifen oder Blechstreifen 56a, 56b bestehen kann, die von einem Steuerbaustein 57 mit Wechselspannung geeigneter Frequenz versorgt werden. Eine Gleichstromversorgung für die Ergänzungsschaltung 53 ist bei 57 angegeben; sobald der "Widerstand" zwischen den beiden Wassersensorelementen 56a, 56b einen Schwellenwert unterschreitet, schaltet der Steuerbaustein 57, der ebenfalls ein IC geeigneter Ausführung sein kann, einen äußeren Stromkreis 58 an Spannung, beispielsweise durch Ansteuerung eines in Reihe mit der Leuchtdiode 54b des Optokopplers 54 liegenden Transistors 59, so daß zusammen mit einer äußeren Wasserstands-Gefahrenanzeige über eine weitere Leuchtdiode 60 der Optokoppler 54 anspricht, dessen Fotowiderstand 54a durchschaltet und die beiden Anschlüsse Pin (11) und (12) miteinander verbindet. Als Steuerbaustein 57 kann ein IC mit der Bezeichnung U 670 B ebenfalls von Telefunken verwendet werden.

Alle in der Beschreibung, den nachfolgenden Ansprüchen und der Zeichnung dargestellten Merkmale können sowohl einzeln als auch in beliebiger Kombination miteinander erfindungswesentlich sein.

**Ansprüche**

1. Vorrichtung mit Einschaltautomatik für ein Nebengerät (Staubsauger) bei Inbetriebnahme eines Hauptgeräts, z.B. Elektrohandwerkzeug, Werkzeugmaschine u.dgl., mit einer (Phasenanschnitt)-Steuerschaltung, die mittels eines Stromsensors (16) die Inbetriebnahme des Hauptgeräts (11) erfaßt und das Nebengerät (Staubsauger 12) zur Inbetriebnahme ansteuert, dadurch gekennzeichnet, daß der Stromsensor (16) ein Ringkern-Durchsteckübertrager (18) ist, dessen Sekundärwicklung (19) mit der (Phasenanschnitt)Steuerschaltung für das Nebengerät (12) und dessen Primärwicklung von der Speisezuleitung (1) für das Hauptgerät (11) gebildet ist.

2. Vorrichtung nach Anspruch 1, dadurch gekennzeichnet, daß die (Phasenanschnitt)Steuerschaltung von einem für sich gesehen bekannten IC-Baustein (17) gebildet ist, der als Teil einer Zusatzschaltung (10) die Anschlußklemmen des Nebengeräts (Staubsaugermotor 12) über einen Triac (19, 19') an Versorgungsspannung legt, wobei die Zusatzschaltung eine an die gleiche Versorgungsspannung gelegte Steckdose (15) für das Hauptgerät (11) aufweist, deren eine Zuleitung über den Ringkern-Durchsteckübertrager (18) geführt ist.

3. Vorrichtung nach Anspruch 1 oder 2, dadurch gekennzeichnet, daß der Ringkern-Durchsteckübertrager (18) eine auf den Toruskörper des Ringkerns gewickelte Sekundärwicklung aufweist und daß die Primärwicklung von der einen Windung der durch die zentrale Öffnung des Ringkerns geführten Zuleitung

6

zum Hauptgerät (11) bzw. zu dessen Steckdose (15) gebildet ist.

4. Vorrichtung nach Anspruch 3, dadurch gekennzeichnet, daß der Ringkern-Durchstecküberträger aus einem Material besteht, welches bei Erreichen einer vorgegebenen, für die Erzeugung sauberer Zündimpulse für die (Phasenanschnitt)Steuerschaltung hinreichenden Primärstroms überlastungs- und überhitzungsfrei in die Sättigung geht.

5. Vorrichtung nach einem der Ansprüche 1 bis 4, dadurch gekennzeichnet, daß der IC-Baustein (17) der (Phasenanschnitt)Steuerschaltung mit einem äußeren Potentiometer (45) zur Drehzahlverstellung des von ihm angesteuerten Nebengerätmotors (Staubsaugermotor) verbunden ist.

6. Vorrichtung nach einem der Ansprüche 1 bis 5, dadurch gekennzeichnet, daß der IC-Baustein (17) der (Phasenanschnitt)Steuerschaltung zur Realisierung eines Sanftanlaufs des Nebengerätmotors mit einem Kondensator (41) beschaltet ist.

7. Vorrichtung nach Anspruch 6, dadurch gekennzeichnet, daß dem Kondensator (41) für den Sanftanlauf eine Entladungsstrecke (Transistor 47) parallelgeschaltet ist, und daß die Entladungsstrecke dann aktiviert wird, wenn der Stromsensor (16) der (Phasenanschnitt)Steuerschaltung die Inbetriebnahme des Hauptgeräts (11) meldet derart, daß die Einschaltzeitpunkte der beiden von der Zusatzschaltung (10) versorgten Geräte (Hauptgerät 11 und Nebengerät 12) zeitlich auseinandergezogen sind.

8. Vorrichtung nach einem der Ansprüche 1 bis 7, dadurch gekennzeichnet, daß ein Unterbrecherschalter (52) vorgesehen ist, der die Entladung des Sanftanlaufkondensators (41) verhindert derart, daß bei Betätigung dieses Schalters normaler Staubsaugerbetrieb ohne Einschaltautomatik bei wirksamem Drehzahlsteller (Potentiometer 45) möglich ist.

9. Vorrichtung nach einem der Ansprüche 1 bis 8, dadurch gekennzeichnet, daß im Ansteuerkreis des Entladetransistors (47) für den Sanftanlaufkondensator (41) ein Zeitverzögerungs-RG-Glied (50, 51) angeordnet ist, welches den bei Abschalten des Hauptgeräts (11) am Entladetransistor (47) anliegenden Schaltbefehl (vom IC-Baustein 17 der Phasenanschnittsteuerung selbst) für einen vorgegebenen Zeitraum zur Realisierung eines Nachlaufs des Nebengeräts verzögert.

10. Vorrichtung nach einem der Ansprüche 1 bis 9, dadurch gekennzeichnet, daß eine Ergänzungsschaltung (53) vorgesehen ist, die den IC-Baustein der (Phasenanschnitt)Steuerschaltung bei bestimmten Betriebszu ständen des Nebengeräts inaktiviert derart, daß dieses auch bei Inbetriebnahme des Hauptgeräts ausgeschaltet wird oder bleibt.

11. Vorrichtung nach Anspruch 10, dadurch gekennzeichnet, daß zur Erfassung des noch zulässigen Wasserstands im Behälter eines Wassersaugers als Nebengerät (11) Wasserstandssensoren (56a, 56b) vorgesehen und über eine Steuerschaltung (57) die diese Aktivierung des IC-Bausteins (17) als (Phasenanschnitt)Steuerschaltung bewirken.

12. Vorrichtung nach Anspruch 11, dadurch gekennzeichnet, daß bei Überschreiten eines vorgegebenen Wasserstandniveaus die Wasserstandssensoren (56a, 56b) ein Schaltglied (59) in einer mit der Spannungsversorgung verbundenen Steuerleitung (58) aktivieren derart, daß ein Optokoppler (54) Anschlüsse eines Versorgungsspannungs-Begrenzungsblocks im IC-Baustein (17) kurzschließt.

# Fig.1

Fig.2

EP 0 349 888 A2